# EUROPEAN PATENT APPLICATION

(11) **EP 4 523 776 A1**
(43) Date of publication of application: **19.03.2025**
(21) Application number: 23196692.0
(22) Date of filing: 12.09.2023
(51) Int. Cl.: B01D 63/10, B01D 53/26, H01M 8/04119

(54) **HUMIDIFIER AND MANUFACTURING PROCESS OF HUMIDIFIER**

(71) Applicant: MANN+HUMMEL GmbH, 71636 Ludwigsburg (DE)
(72) Inventor: TESCHNER, Matthias, 71636 Ludwigsburg (DE); VOCA, Oliver, 71636 Ludwigsburg (DE); WELLER, Benedikt, 71636 Ludwigsburg (DE); TRAUTMANN, Pius, 71636 Ludwigsburg (DE); ASSMANN, Mathias, 71636 Ludwigsburg (DE)
(74) Representative: Mann + Hummel Intellectual Property

(57) **Abstract**

A humidifier (100) includes a wound portion (10) wrapped around a central axis (80) and comprising enclosures (12), a first one the enclosures (12) comprising a first pair of semipermeable membranes (14) separated by a first spacer layer (16) to form one among wet-gas channels (20), and a second one of the enclosures (12) comprising a second pair of semipermeable membranes (14) separated by a second spacer layer (18) to form one among dry-gas channels (22). The dry-gas channels (22) are configured to receive a dry gas (52) through at least part of a first frontal area (24) of the wound portion (10) and in an axial direction (80) along the dry-gas channels (22). The wet-gas channels (20) are configured to receive a wet gas (50) through at least part of a second frontal area (26) of the wound portion (10) and in the axial direction (80) along the wet-gas channels (20), the second frontal area (26) being opposite to the first frontal area (24).

## Description

### TECHNICAL FIELD

The invention relates to a humidifier, in particular a humidifier for a fuel cell system, as well as a process of manufacturing a humidifier.

### BACKGROUND ART

Humidifiers are used for example to humidify process gas for fuel cells which are operated with molecular hydrogen and/or oxygen or air for electricity generation. The process gases supplied to the fuel cell are for this reason usually set to a desired, stable humidity in a humidifier. A humidifier comprises flow plates which are usually provided with channel structures, wherein the channels adjoin a water transfer medium, typically in the form of a semipermeable layer such as a water-transfer membrane. An assembly usually provides a plurality of flow plates, between which there are arranged water transfer membranes.

For example, on one side of a semipermeable layer a moist gas, e.g. an exhaust gas from the fuel cell, is guided through the channels of an adjacent flow plate, and on the opposite side of the semipermeable layer a dry gas, e.g. fresh air, is passed through channels of a second flow plate. In this case, the moist gas on one side of the semipermeable layer gives off moisture to the semipermeable layer, whereas on the opposite side the semipermeable layer gives off moisture to the dry gas.

DE102008006735A1 discloses a water vapor transfer unit as a humidifier for a fuel cell system that employs a spiral-wound design to reduce its size and increase its performance. The water vapor transfer unit includes a center tube having a plurality of openings through which the cathode exhaust gas flows. The water vapor transfer unit also includes a cylindrical portion wound around the center tube that includes a plurality of enclosures and a plurality of dry spacer layers separating the enclosures. Each enclosure includes a pair of membranes separated by a wet spacer layer. The dry cathode inlet air flows down the dry spacer layers between the enclosures and the cathode exhaust gas flows into the plurality of enclosures through the openings in the center tube along the wet spacer layers to allow the membranes to absorb humidification that is transferred to the cathode inlet air.

### SUMMARY

It is an object of the invention to provide a cost-efficient humidifier, in particular a humidifier for a fuel cell system.

Another object is to provide a cost-efficient process of manufacturing a humidifier.

According to an aspect of the invention the object is achieved by a humidifier comprising a wound portion wrapped around a central axis and comprising enclosures, a first one the enclosures comprising a first pair of semipermeable membranes separated by a first spacer layer to form one among wet-gas channels, and a second one of the enclosures comprising a second pair of semipermeable membranes separated by a second spacer layer to form one among dry-gas channels. The dry-gas channels are configured to receive a dry gas through at least part of a first frontal area of the wound portion and in an axial direction along the dry-gas channels. The wet-gas channels are configured to receive a wet gas through at least part of a second frontal area of the wound portion and in the axial direction along the wet-gas channels, the second frontal area being opposite to the first frontal area.

According to another aspect of the invention the further object is achieved by a process of manufacturing a humidifier, the process comprising forming an enclosure by providing a first part of a semipermeable membrane, arranging a first spacer layer on top of the first part of the semipermeable membrane, providing broken tracks of sealing material at edges of the first part of the semipermeable membrane to form wet-gas channels, arranging a second part of the semipermeable membrane, arranging a second spacer layer on top of the second part of the semipermeable membrane, and providing broken tracks of the sealing material at edges of the second part of the semipermeable membrane to form dry-gas channels, and forming a wound portion of the humidifier by winding the enclosure around a central axis.

Advantageous embodiments are described in the dependent claims, the description and the drawings.

According to a first aspect of the invention, a humidifier, in particular a humidifier for a fuel cell system, is proposed, at least comprising at least one wound portion wrapped around a central axis, having a plurality of enclosures and a plurality of first spacer layers separating the enclosures, thus forming wet-gas channels, wherein each enclosure comprises a pair of semipermeable membranes separated by a second spacer layer, thus forming dry-gas channels. One or more dry-gas channels for a dry gas are provided where the dry gas flows through at least part of a first frontal area of the wound portion, and passes in axial direction along the dry-gas channels between the enclosures down the wound portion. One or more wet-gas channels for a wet gas are provided where the wet gas flows through at least part of a second frontal area of the wound portion, the second frontal area being opposite to the first frontal area, and passes in opposite axial direction to the dry gas along the wet-gas channels between the enclosures down the wound portion.

The proposed humidifier is equipped with two separate gas-tight flow channels in an extremely small installation space, with the additional integration of a water-permeable membrane with a simultaneous low pressure difference. This is achieved by a coiled two-layer spiral humidifier and an axial flow in coflow or counterflow principle.

The proposed coiled spiral humidifier allows an optimal axial inflow of the dry intake air and wet exhaust air and at the same time free choice of different spiral shapes as e.g. round, oval, hexagonal, in order to be able to make optimum use of the limited installation space. The necessary frontal and segmented closure of channels on the dry and wet side is achieved during the winding process by applying a sealing in the frontal areas. Via segmented end discs, the wet exhaust air and the dry intake air are passed through the spiral humidifier in coflow or counterflow. Due to the omission of support plates, concerning installation space, weight, as is necessary for stacked, planar plate humidifiers, the spiral humidifier offers significant advantages in terms of space, weight and cost.

An important function of the spacer layers in the form of grids is to swirl the flow in order to increase the moisture transport through the semipermeable membrane. By only inserting the grids, different grid shapes can be considered to realize the best compromise between pressure loss and moisture transfer, while at the same time easily changing the channel height.

Dry and wet side channels of the enclosures are wound together around a core, whereby different winding shapes are possible, round, oval, elliptical, hexagonal (honeycomb) and others, are possible in order to make optimum use of different spaces. Due to the water-permeable but pressure-tight membrane there is no air leakage between the wound dry and wet channels. The channels on the dry and wet side are sealed longitudinally at the start and end positions in the frontal areas, e.g. by a track with hotmelt adhesive.

in contrast to the state of the art, the proposed humidifier is flown through exclusively axially, in order to be able to operate the humidifier with as low a pressure loss as possible and to enable the necessary sealing from dry to wet side in a process-safe and simple manner. Dry side and wet side are operated in counterflow and coflow to achieve advantageous moisture transfer through the semipermeable membrane. Since the channel heights are e.g. between approx. 0.5 -1.5 mm, a separate and tight charge and discharge of the air on the dry and wet side is essential, using as large a cross-sectional area as possible.

The winding principle with wet and dry channels does not require any additional radial sealing. A large membrane area can be accommodated in a compact installation space, with low pressure loss at the same time. Upto segmented end discs and a simple outertube, no complex housing with additional sealing points is required. The winding process is a reliable and cost-effective manufacturing process.

According to a favorable embodiment of the humidifier, the wet-gas channels and the dry-gas channels may be configured for a counterflow and/or a coflow of the wet gas and the dry gas through the wound portion. Thus, a favorable moisture transfer through the semipermeable membrane may be achieved.

According to a favorable embodiment of the humidifier, means may be provided for feeding the dry gas to the first frontal area and means may be provided for feeding the wet gas to the second frontal area in a sealed manner. Via segmented end discs, the wet exhaust air and the dry intake air may advantageously be passed through the spiral humidifier in counterflow and coflow.

According to a favorable embodiment of the humidifier, each of the first frontal area and the second frontal area may be subdivided into segments of the same size. The dry-gas channels or the wet-gas channels may be configured as blind channels within one among the segments. Segments with blind dry-gas channels and segments with blind wet-gas channels may be arranged alternatingly side-by-side on each of the first frontal area and the second frontal area. Segments with blind dry-gas channels on the first frontal area correspond to segments with open dry-gas channels on the second frontal area, and segments with open wet-gas channels on the first frontal area correspond to segments with blind wet-gas channels on the second frontal area. Via segmented end discs, the wet exhaust air and the dry intake air may advantageously be passed through the spiral humidifier in counterflow and coflow for a favorable moisture transfer through the semipermeable membrane.

Alternatively, it may be also favorable, if segments with blind dry-gas channels on the first frontal area correspond to segments with blind wet-gas channels on the second frontal area and segments with blind wet-gas channels on the first frontal area correspond to segments with blind dry-gas channels on the second frontal area. This arrangement may also be advantageous for optimizing a swirling behavior of the dry gas and the wet gas and thus for optimizing the moisture transfer through the semipermeable membrane.

According to a favorable embodiment of the humidifier, a number of the segments may correspond to dividing 360 by an integer number, such that a remainder of the dividing equals zero. Thus, an equal number of segments for wet-gas and dry-gas, respectively, may be provided on circular shaped frontal areas.

According to a favorable embodiment of the humidifier, the humidifier may further include a sealing material configured to close the blind channels on the first frontal area or the second frontal area. In particular, a penetration depth of the sealing material into the wound portion in axial direction may be not more than 15 mm, preferably not more than 10 mm. Advantageously, the channels on the dry and wet side may be sealed longitudinally at the start and end positions in the frontal areas, e.g. by a track with hotmelt adhesive, in order to separate the flowing wet-gas and dry-gas for favorable moisture transfer through the semipermeable membrane.

According to a favorable embodiment of the humidifier, the sealing material may include a track separating the segments on the first frontal area and the second frontal area. Thus, a clear separation between adjacent segments may be guaranteed for favorable separation of wet-gas and dry-gas

According to a favorable embodiment of the humidifier, each of the first spacer layer and the second spacer layer may include a grid (e.g., made of plastic) being crossed in two planes. An important function of the spacer layers in the form of grids is to swirl the flow in order to increase the moisture transport through the semipermeable membrane. Crossing grids may favorably enhance the swirling behavior of the flowing gases.

According to a favorable embodiment of the humidifier, the wound portion may have one among a cylindrical cross-section, a triangular cross-section, a rectangular cross-section, a hexagonal cross-section, an elliptical cross-section, a set of closest-neighbored wound portions with a hexagonal cross-section. Advantageously, different cross-sections may be chosen according to limited mounting space requirements for the humidifier.

According to another aspect of the invention, a process of manufacturing a humidifier is proposed, forming the enclosure by at least providing a first part of the semipermeable membrane; arranging a first spacer layer on top of the first part of the semipermeable membrane; providing broken tracks of sealing material at the edges of the first part of the semipermeable membrane thus closing the wet-gas channels; arranging a second part of the semipermeable membrane; arranging a second spacer layer on top of the second part of the semipermeable membrane; providing broken tracks of sealing material at the edges of the second part of the semipermeable membrane thus closing the dry-gas channels; forming the wound portion by winding the enclosure around the central axis.

Dry and wet side channels of the enclosures are wound together around a core, whereby different winding shapes are possible, round, oval, elliptical, hexagonal (honeycomb) and others, are possible in order to make optimum use of different spaces. Due to the water-permeable but pressure-tight membrane there is no air leakage between the wound dry and wet channels. The channels on the dry and wet side are sealed longitudinally at the start and end positions in the frontal areas, e.g. by a track with hotmelt adhesive.

The winding principle with wet and dry channels does not require any additional radial sealing. A large membrane area can be accommodated in a compact installation space, with low pressure loss at the same time. Up to segmented end discs and a simple outertube, no complex housing with additional sealing points is required. The winding process is a reliable and cost-effective manufacturing process.

According to a favorable embodiment of the process, a length and a position of the broken tracks of the sealing material may be adapted with a total length of the enclosure according to an actual radius of the wound portion. Thus, the tracks of the sealing material may favorably be adapted to the shape of the segments chosen for optimum gas flow into and out of the frontal areas of the humidifier.

### BRIEF DESCRIPTION OF DRAWINGS

The present invention together with the above-mentioned and other objects and advantages may best be understood from the following detailed description of the embodiments, but not restricted to the embodiments. The drawings show:
Figure 1 a cross-section through an unwound enclosure of a humidifier according to an embodiment of the invention with two membranes and spacer layers;
Figure 2 a frontal view of a humidifier, in particular a humidifier for a fuel cell system, according to an embodiment of the invention;
Figure 3 an isometric view of the humidifier according to Figure 2;
Figure 4 a frontal view of a humidifier with a triangular cross-section according to a further embodiment of the invention;
Figure 5 a frontal view of a humidifier with a rectangular cross-section according to a further embodiment of the invention;
Figure 6 a frontal view of a humidifier with a hexagonal cross-section according to a further embodiment of the invention;
Figure 7 a frontal view of a humidifier with an elliptic cross-section according to a further embodiment of the invention;
Figure 8 a detailed view of an edge part of a humidifier with a rectangular cross-section;
Figure 9 a frontal view of a humidifier with a set of closest-neighbored portions with a hexagonal cross-section according to a further embodiment of the invention;
Figure 10 a frontal view of a humidifier with a cylindrical cross-section with a segmented frontal area according to a further embodiment of the invention;
Figure 11 a frontal view of a humidifier with a cylindrical cross-section with a different number of segments according to a further embodiment of the invention;
Figure 12 a frontal view of a humidifier with a cylindrical cross-section with a different number of segments according to a further embodiment of the invention;
Figure 13 a detailed view of the frontal area of the humidifier according to Figure 12;
Figure 14 the humidifier according to Figure 11 in a side view and the two frontal views;
Figure 15 a frontal view of an uncoiled enclosure;
Figure 16 a frontal view of an uncoiled enclosure with a different length;
Figure 17 a perspective view of a humidifier according to Figure 11;
Figure 18 a first plan view of the humidifier according to Figure 17; and
Figure 19 a second plan view of the humidifier according to Figure 17.

### DETAILED DESCRIPTION

in the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

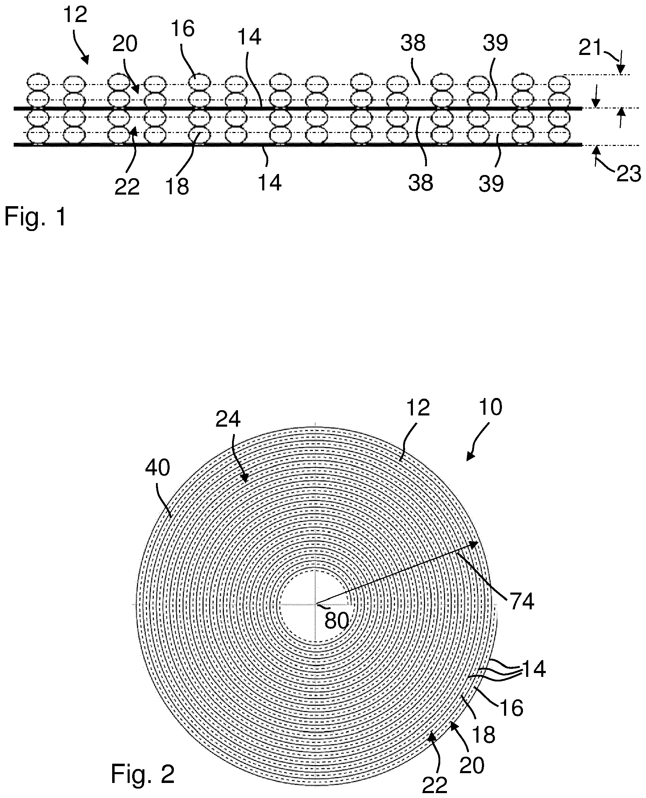

Figure 1 depicts a cross-section through an unwound enclosure 12 of a humidifier 100 according to an embodiment of the invention with two membranes 14 and first and second spacer layers 16, 18.

The two membranes 14 are separated by the second spacer layer 18 thus forming the dry channel 22. On top of the upper membrane 14 the first spacer layer 16 is arranged, thus forming the wet channel 20 when the next enclosure 12 is arranged on top in the winding process.

The semipermeable membrane 14 separates the wet exhaust gas flow channel from the dry supply air flow channel. The semipermeable membrane 14 can be designed, for example, as a PFSA (perfluorosulfonic acid) membrane. Such membranes are also commonly used as proton exchange membranes. The membrane is airtight but permeable to moisture.

The first and the second spacer layer 16, 18 are configured as a plastics grid. The spacer layers 16, 18 are used to fix a height of the gas flow channels 20, 22 and support the membranes 14 against the pressure forces of the flowing gases. Further the spacer layers 16, 18 serve for swirling the flowing gases.

For this purpose, the plastics grid are crossed in two planes 38, 39 each, for favorable swirling of the flowing gases and thus favorable moisture transfer through the membranes 14.

Due to the fact that the grids are only inserted, it is easy to consider different grid shapes to realize the best compromise between pressure loss and moisture transfer, while at the same time easily changing the channel height.

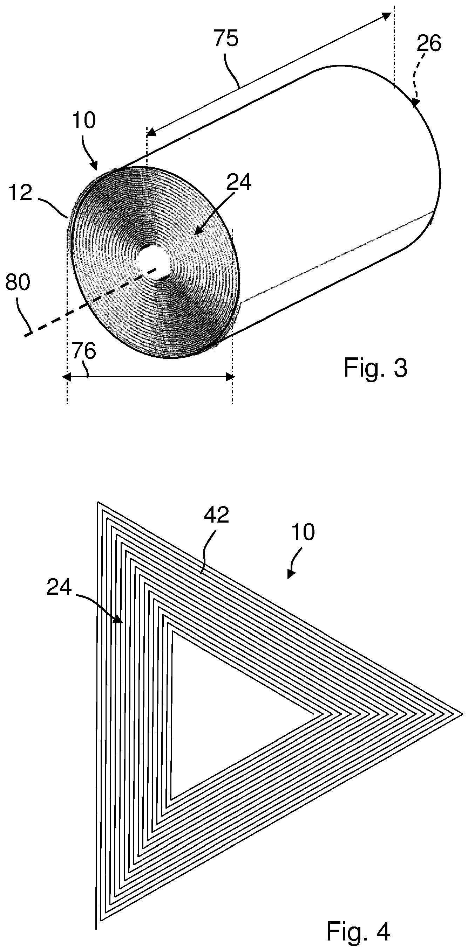

Figure 2 depicts a frontal view of a humidifier 100, in particular a humidifier 100 for a fuel cell system, according to an embodiment of the invention, whereas in Figure 3 an isometric view of the humidifier 100 according to Figure 2 is shown.

The humidifier 100, in particular a humidifier 100 for a fuel cell system, comprises a wound portion 10 wrapped around a central axis 80, having a plurality of enclosures 12 and a plurality of first spacer layers 16 separating the enclosures 12, thus forming wet-gas channels 20. Each enclosure 12 comprises a pair of semipermeable membranes 14 separated by a second spacer layer 18, thus forming dry-gas channels 22, as shown in Figure 1.

The wound portion 10 is configured with a cylindrical cross-section 40.

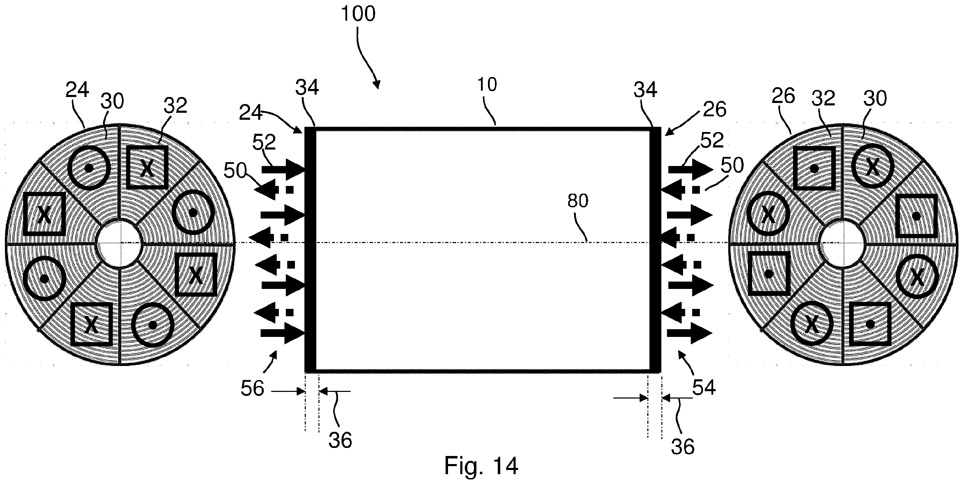

One or more dry-gas channels 22 for a dry gas 52 are provided where the dry gas 52 flows through at least part of a first frontal area 24 of the wound portion 10, and passes in axial direction 80 along the dry-gas channels 22 between the enclosures 12 down the wound portion 10, as is shown schematically in Figure 14.

One or more wet-gas channels 20 for a wet gas 50 are provided where the wet gas 50 flows through at least part of a second frontal area 26 of the wound portion 10, the second frontal area 26 being opposite to the first frontal area 24, and passes in opposite axial direction 80 to the dry gas 52 along the wet-gas channels 20 between the enclosures 12 down the wound portion 10.

Due to the water-permeable but pressure-tight membrane 14 there is no air leakage between the wound dry and wet channels 22, 20. The channels on the dry and wet side are sealed longitudinally at the start and end positions of the frontal areas 24, 26, e.g. by a track with hotmelt adhesive.

in the example shown in Figure 3, with a channel height 21, 23 of 1.5 mm with a number of 22 turns and a length 75 of 250 mm, a membrane area of 3.5 m² is accommodated. A diameter 76 of the wound portion 10 is 166 mm.

By halving the channel height 21, 23 to 0.75 mm, twice the membrane area of 7 m2 can be accommodated in almost the same space. The channel heights 21, 23 of the wet-gas channel 20 and the dry-gas channel 22 may be the same. Alternatively the channel heights 21, 23 may also be different.

By using other spiral shapes, e.g. hexagonal spiral shapes (honeycombs), the available space can be better used.

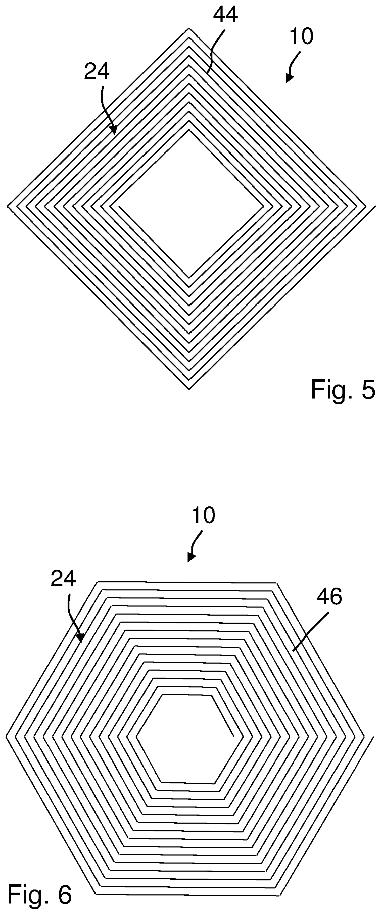

Figure 4 depicts a frontal view of a humidifier 100 with a triangular cross-section 42, Figure 5 with a rectangular cross-section 44 and Figure 6 with a hexagonal cross-section 46.

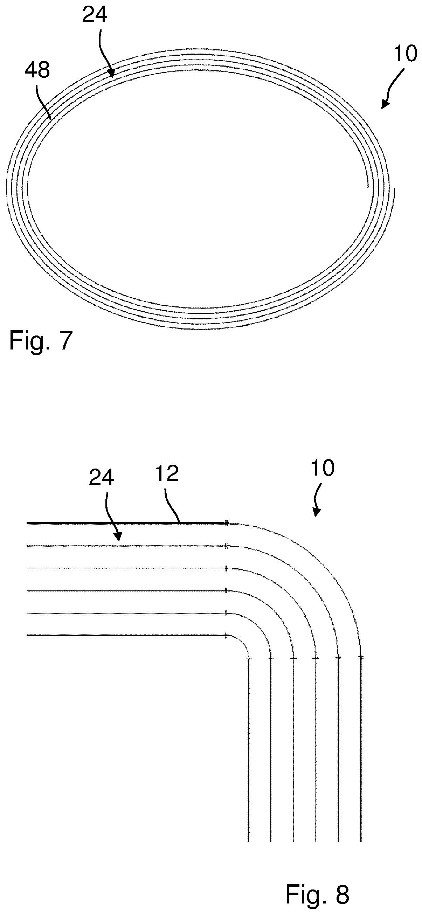

For the angular spiral shapes, however, the angular winding shape is only for a few layers, because in reality there is only one corner radius, and the corner radius increases from layer to layer, as is shown in a detailed view of an edge part of a humidifier 100 with a rectangular cross-section in Figure 8, i.e. angular spiral forms approach the round or elliptical spiral shape 48 with a large number of layers as is shown in Figure 7.

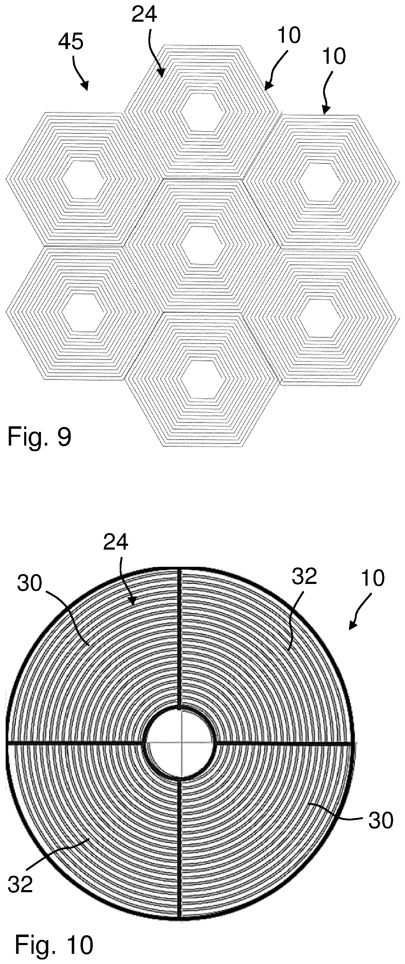

The hexagonal spiral shape (honeycombs) is particularly well suited for a space-saving arrangement of spiral humidifiers 100 in a parallel circuit, as is shown in Figure 9 with a frontal view of a humidifier 100 with a set 45 of closest-neighbored wound portions 10 with a hexagonal cross-section 46. A honeycomb structure is advantageous in many applications due to its unique geometric properties. It offers high strength with low weight, an optimal surface area per amount of material, and an efficient use of space.

in contrast to the state of the art, the proposed humidifier 100 is flown through exclusively axially, in order to be able to operate the humidifier 100 with as low a pressure loss as possible and to enable the necessary sealing from dry to wet side in a process-safe and simple manner. Dry side and wet side are operated in counterflow and coflow to achieve advantageous moisture transfer through the semipermeable membrane 14. Since the channel heights are e.g. between approx. 0.5 -1.5 mm, a separate and tight charge and discharge of the air on the dry and wet side is essential, using as large a cross-sectional area as possible.

To achieve this purpose both ends of a cylindrical, coiled humidifier 100 may be divided into segments 30, 32 of equal size. A number n of segments 30, 32 may be chosen so that the remainder of the integer division 360/n is equal to 0 (2, 3, 4, 5, 6, 8, 9, 10, 12, 15, 18, 20, ...). The higher the number n of segments 30, 32 is, the faster and more evenly the flow is distributed in the channels 20, 22. However, the number n of segments 30, 32 also takes into account practical considerations with regard to installation space and simple inflow and outflow duct.

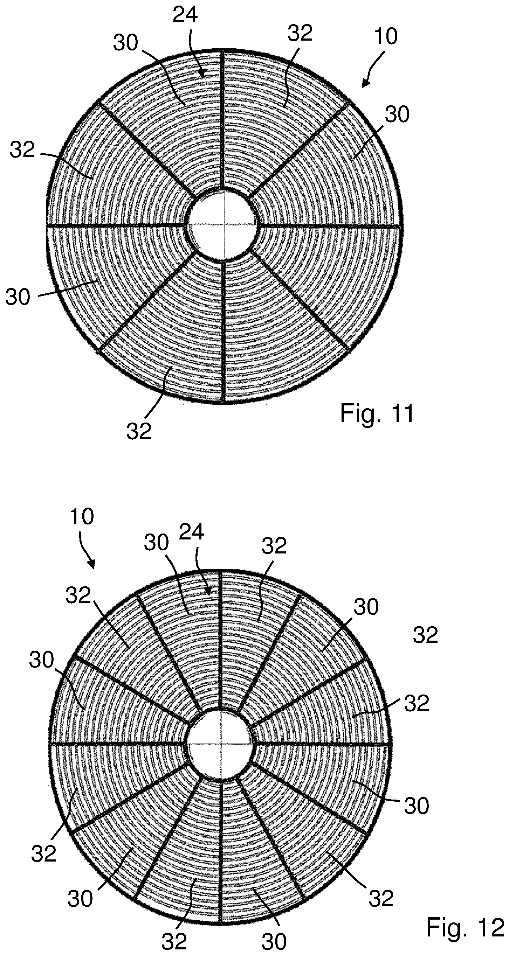

According to an embodiment of the invention, Figure 10 depicts a frontal view of a humidifier 100 with a cylindrical cross-section with a segmented frontal area. In this case four segments 30, 32 are chosen. Figure 11 depicts a frontal view of a humidifier 100 with eight segments 30, 32 according to a further embodiment of the invention, whereas in Figure 12 a frontal view of a humidifier 100 with twelve segments are shown.

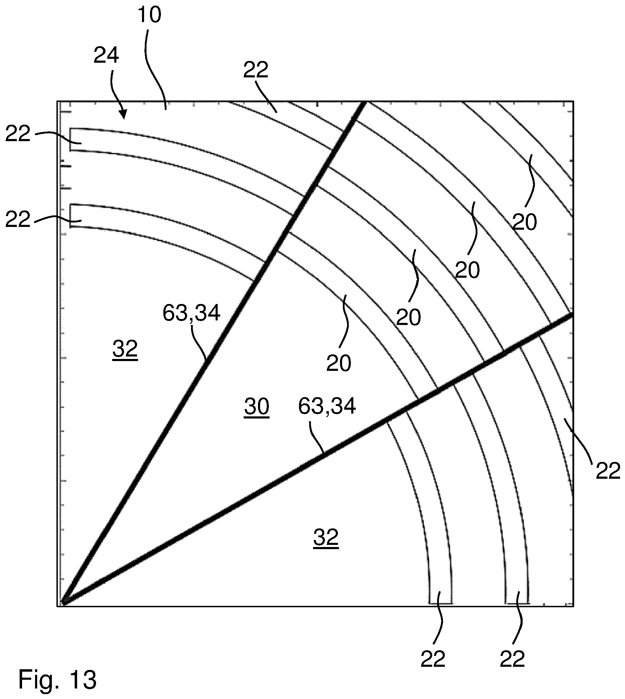

in each segment 30, 32, only the dry-gas or wet-gas channels 22, 20 are open. Figure 13 shows a detailed view of segments 30, 32 with only one channel category open at a time. In segments 32 only the dry-gas channels 22 are open, whereas in the segment 30 only the wet-gas channels 20 are open.

The blind wet-gas and dry-gas channels 20, 22 are closed on the first frontal area 24 or the second frontal area 26 by a sealing material 34, in particular an adhesive. In particular, a penetration depth 36 of the sealing material 34 into the wound portion 10 of the humidifier 100 in axial direction 80 is not more than 15 mm, preferably not more than 10 mm. The penetration depth 36 is large enough to ensure tightness and connection of an end cover to the humidifier 100.

The segments 30, 32 on the first and second frontal area 24, 26 are also separated by a track 63 of the sealing material 34.

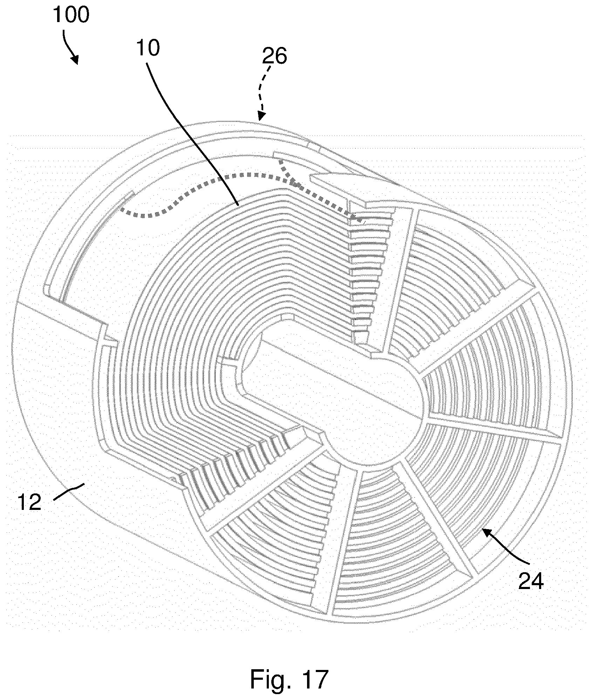

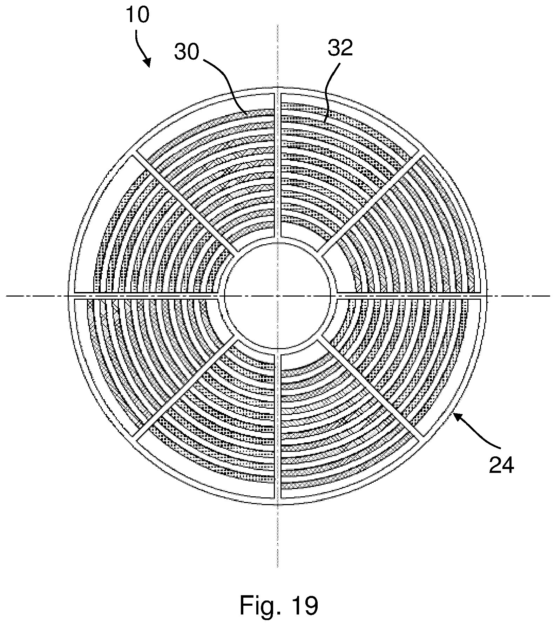

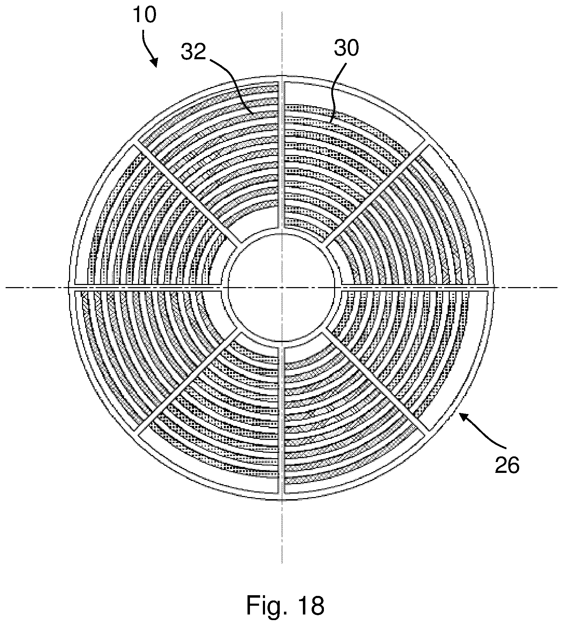

Figure 14 depicts a humidifier 100 according to Figure 11 in a side view and the two frontal views from both sides of the wound portion 10. Figure 17 depicts a perspective view of a humidifier 100 according to Figure 11. Figure 18 depicts a first plan view of the humidifier 100 according to Figure 17. Figure 19 depicts a second plan view of the humidifier 100 according to Figure 17.

The segmental inflow and outflow of the dry gas 52 and the wet gas 50 in counterflow and coflow principle through sealed segments 30, 32 is shown. Crosses (Figure 14) or dots (Figures 18 and 19) in the segments 30, 32 symbolize gases 50, 52 entering the frontal area 24, 26, and points (Figure 14) or hatches (Figures 18 and 19) symbolize exiting gases 50, 52. The squares symbolize the dry gas 52, the circles symbolize the wet gas 50. After inflow and before outflow, a flow redirection occurs within the humidifier 100, where counterflow and coflow can occur.

The black line at the first and second frontal area 24, 26 in the side view corresponds to the penetration depth 36 of the sealing material 34 for closing the channels 20, 22.

The first frontal area 24 and the second frontal area 26 are subdivided into eight segments 30, 32 of the same size. The dry-gas channels 22 or the wet-gas channels 20 are configured as blind channels 22, 20 within one segment 30, 32. in particular, segments 30 with blind dry-gas channels 22 and segments 32 with blind wet-gas channels 20 are arranged alternatingly side-by-side on the first frontal area 24 and the second frontal area 26.

in particular, segments 30 with blind dry-gas channels 22 on the first frontal area 24 correspond to segments 30 with blind dry-gas channels 22 on the second frontal area 26, and segments 32 with blind wet-gas channels 20 on the first frontal area 24 correspond to segments 32 with blind wet-gas channels 20 on the second frontal area 26.

The wet-gas channels 20 and the dry-gas channels 22 are configured for a counterflow of the wet gas 50 and the dry gas 52 through the wound portion 10.

Means 56 are provided for feeding the dry gas 52 to the first frontal area 24 and means 54 are provided for feeding the wet gas 50 to the second frontal area 26 in a sealed manner. The means 54, 56 are not further detailed in the Figure.

The dry gas 52 enters the first frontal area 24 through the segments 32 with blind wet-gas channels 20 and open dry-gas channels 22. The dry gas 52 is distributed inside the wound portion 10 in all dry-gas channels 22 in spiral form through the whole body of the humidifier 100 and exits through the segments 32 with blind wet-gas channels 20 and open dry-gas channels 22 on the second frontal area 26. The wet gas 50 enters the second frontal area 26 of the wound portion 10 through the segments 30 with open wet-gas channels 20, is distributed inside the wound portion 10 in all wet-gas channels 20 and exits through the segments 30 with open wet-gas channels 20 on the first frontal area 24. As the channels 20, 22 are wound around the central axis 80 the dry gas 52 and the wet gas 50 are distributed in spiral manner around the central axis 80 thus achieving an effective moisture transfer through the semipermeable membrane 14.

Alternatively, it may be also favorable, if segments 30 with blind dry-gas channels 22 on the first frontal area 24 correspond to segments 32 with blind wet-gas channels 20 on the second frontal area 26 and vice versa. This arrangement may also be advantageous for optimizing a swirling behavior of the dry gas 52 and the wet gas 50 and thus for optimizing the moisture transfer through the semipermeable membrane 14.

in a process of manufacturing a humidifier 100, forming the enclosure 12 comprises at least providing a first part of the semipermeable membrane 14; arranging a first spacer layer 16 on top of the first part of the semipermeable membrane 14; providing broken tracks 60 of sealing material 34 at the edges 64 of the first part of the semipermeable membrane 14 thus closing the wet-gas channels 20; arranging a second part of the semipermeable membrane 14; arranging a second spacer layer 18 on top of the second part of the semipermeable membrane 14; providing broken tracks 62 of sealing material 34 at the edges 66 of the second part of the semipermeable membrane 14 thus closing the dry-gas channels 22; and forming the wound portion 10 by winding the enclosure 12 around the central axis 80.

The sealing of the channels 20, 22 in the segments 30, 32 is achieved by dosing a sealant onto the evenly wound membranes 14 before the actual winding process. The arc length 68 and position 70 of the sealing track 60, 62 of the wound spiral must be adapted to the current winding radius 74 (see Figure 2), i.e. the arc length 68 of the sealing track 60, 62 increases continuously with the radius 74.

Therefore, a length 68 and a position 70 of the broken track 60, 62 of the sealing material 34 may be adapted with a total length 72 of the enclosure 12 according to an actual radius 74 of the wound portion 10.

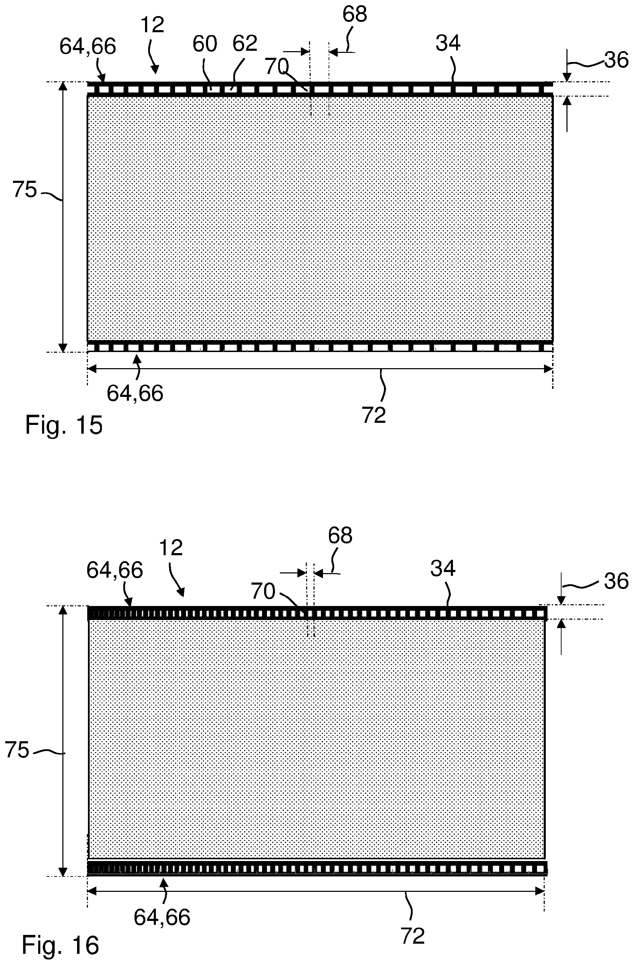

Thus, Figure 15 depicts a frontal view of an uncoiled enclosure 12 with a total length 72 of e.g. 400 mm, whereas in Figure 16 a frontal view of an uncoiled enclosure 12 with a different total length 72 of e.g. 1200 mm is shown.

it is clearly to be seen, that the arc length 68 of the broken tracks 60, 62 of the sealing material 34 are varying significantly for the enclosure 12 with the greater total length 72. The penetration depth 36 of the sealing material 34 is also marked in Figures 15 and 16.

### REFERENCE SIGNS LIST

- 10: wound portion
- 12: enclosure
- 14: semipermeable membrane
- 16: first spacer layer
- 18: second spacer layer
- 20: wet channel
- 21: height wet channel
- 22: dry channel
- 23: height dry channel
- 24: first frontal area
- 26: second frontal area
- 30: segment
- 32: segment
- 34: sealing material
- 36: penetration depth
- 38: plane
- 39: plane
- 40: cylindrical cross-section
- 42: triangular cross-section
- 44: rectangular cross-section
- 45: set
- 46: hexagonal cross-section
- 48: elliptical cross-section
- 50: wet gas
- 52: dry gas
- 54: means
- 56: means
- 60: broken tracks
- 62: broken line
- 63: track
- 64: edge
- 66: edge
- 68: length
- 70: position
- 72: total length
- 74: radius
- 75: length
- 76: diameter
- 80: central axis
- 100: humidifier

## Claims

1. A humidifier (100) comprising:
a wound portion (10) wrapped around a central axis (80) and comprising enclosures (12), a first one the enclosures (12) comprising a first pair of semipermeable membranes (14) separated by a first spacer layer (16) to form one among wet-gas channels (20), and a second one of the enclosures (12) comprising a second pair of semipermeable membranes (14) separated by a second spacer layer (18) to form one among dry-gas channels (22),
wherein the dry-gas channels (22) are configured to receive a dry gas (52) through at least part of a first frontal area (24) of the wound portion (10) and in an axial direction (80) along the dry-gas channels (22), and
wherein the wet-gas channels (20) are configured to receive a wet gas (50) through at least part of a second frontal area (26) of the wound portion (10) and in the axial direction (80) along the wet-gas channels (20), the second frontal area (26) being opposite to the first frontal area (24).

2. The humidifier according to claim 1, wherein the wet-gas channels (20) and the dry-gas channels (22) are configured for a counterflow of the wet gas (50) and the dry gas (52) through the wound portion (10).

3. The humidifier according to claim 1, wherein the wet-gas channels (20) and the dry-gas channels (22) are configured for a coflow of the wet gas (50) and the dry gas (52) through the wound portion (10).

4. The humidifier according to claim 1, wherein the wet-gas channels (20) and the dry-gas channels (22) are configured for a counterflow and a coflow of the wet gas (50) and the dry gas (52) through the wound portion (10).

5. The humidifier according to any one of the preceding claims, wherein each of the first frontal area (24) and the second frontal area (26) are subdivided into segments (30, 32) of the same size.

6. The humidifier according to claim 5, wherein the dry-gas channels (22) or the wet-gas channels (20) are configured as blind channels (22, 20) within one among the segments (30, 32).

7. The humidifier according to claim 6, wherein segments (30) with blind dry-gas channels (22) and segments (32) with blind wet-gas channels (20) are arranged alternatingly side-by-side on each of the first frontal area (24) and the second frontal area (26).

8. The humidifier according to claim 6, wherein segments (30) with blind dry-gas channels (22) on the first frontal area (24) correspond to segments (30) with open dry-gas channels (22) on the second frontal area (26), and
wherein segments (32) with open wet-gas channels (20) on the first frontal area (24) correspond to segments (32) with blind wet-gas channels (20) on the second frontal area (26).

9. The humidifier according to claim 6, further comprising a sealing material (34) configured to close the blind channels (20, 22) on the first frontal area (24) or the second frontal area (26).

10. The humidifier according to claim 9, wherein the sealing material (34) comprises a track (63) separating the segments (30, 32) on the first frontal area and the second frontal area (24, 26).

11. The humidifier according to any one of claims 5 to 10, wherein a number of the segments (30, 32) corresponds to dividing 360 by an integer number, such that a remainder of the dividing equals zero.

12. The humidifier according to any one of the preceding claims, wherein each of the first spacer layer and the second spacer layer (16, 18) comprises a grid being crossed in two planes (38, 39).

13. The humidifier according to any one of the preceding claims, wherein the wound portion (10) has one among a cylindrical cross-section (40), a triangular cross-section (42), a rectangular cross-section (44), a hexagonal cross-section (46), an elliptical cross-section (48), a set (45) of closest-neighbored wound portions (10) with a hexagonal cross-section (46).

14. A process of manufacturing a humidifier (100), the process comprising:
forming an enclosure (12) by:
providing a first part of a semipermeable membrane (14);
arranging a first spacer layer (16) on top of the first part of the semipermeable membrane (14);
providing broken tracks (60) of sealing material (34) at edges (64) of the first part of the semipermeable membrane (14) to form wet-gas channels (20);
arranging a second part of the semipermeable membrane (14);
arranging a second spacer layer (18) on top of the second part of the semipermeable membrane (14); and
providing broken tracks (62) of the sealing material (34) at edges (66) of the second part of the semipermeable membrane (14) to form dry-gas channels (22); and
forming a wound portion (10) of the humidifier (100) by winding the enclosure (12) around a central axis (80).

15. The process according to claim 14, wherein a length (68) and a position (70) of the broken tracks (60, 62) of the sealing material (34) is adapted with a total length (72) of the enclosure (12) according to an actual radius (74) of the wound portion (10).
